# EUROPEAN PATENT SPECIFICATION

(11) **EP 2 151 956 B1**
(45) Date of publication and mention of the grant of the patent: **03.10.2012**
(21) Application number: 08757516.3
(22) Date of filing: 27.05.2008
(51) Int. Cl.: H04L 29/06, H04L 12/24

(54) **RESOURCE CONTROL METHOD AND DEVICE UNDER SERVICE AND BEARING SEPARATING STRUCTURE**
RESSOURCENKONTROLLE, VERFAHREN UND GERÄT UNTER DIENST- UND TRÄGERTRENNUNGSSTRUKTUR
PROCÉDÉ ET DISPOSITIF DE COMMANDE DE RESSOURCE EN SERVICE ET STRUCTURE DE SÉPARATION DE SUPPORT

(30) Priority: 02.06.2007 CN 200710111735
(43) Date of publication of application: 10.02.2010
(73) Proprietor: Huawei Technologies Co., Ltd., Longgang District, Shenzhen Guangdong 518129 (CN)
(72) Inventor: LIN, Yangbo, Shenzhen 518129 (CN)
(74) Representative: Kreuz, Georg Maria
(86) International application number: PCT/CN2008/071102
(87) International publication number: WO 2008/148338

(56) References cited:
- EP-A1- 1 739 922
- CN-A- 1 964 365
- CN-A- 101 166 178
- US-A1- 2007 116 018
- "Gateway control protocol: Version 3 ; H.248.1 (09/05)- series H : Audiovisual and multimedia systems - Infrastructure of audiovisual services - Communication procedures" ITU-T STANDARD IN FORCE (I), INTERNATIONAL TELECOMMUNICATION UNION, GENEVA, CH, no. H.248.1 (09/05), 13 September 2005 (2005-09-13), pages I-88, XP002587351
- YANGBO LIN: "Draft new H.248.RESMAN "Resource Management Packages"" STUDY GROUP 16 - TD 515 (WP2/16), 26 June 2007 (2007-06-26), - 6 July 2007 (2007-07-06) pages 1-9, XP002586938
- "Telecommunications and Internet converged Services and Protocols for Advanced Networking (TISPAN); Gate control protocol; ETSI TS 102 333" ETSI STANDARDS, LIS, SOPHIA ANTIPOLIS CEDEX, FRANCE, vol. TISPAN, no. V1.1.2, 1 July 2004 (2004-07-01), XP014016298 ISSN: 0000-0001

## Description

### Field of the Invention

The present invention relates to the communication field, and in particular, to a resource control technology in an architecture where services are separated from bearers.

### Background of the Invention

A Media Gateway Controller (MGC) and a Media Gateway (MG) are two key components in a packet-switched network where services are separated from bearers. The MGC is responsible for service control, and the MG is responsible for media bearing. Thus, the service control plane is separated from the media bearer plane.

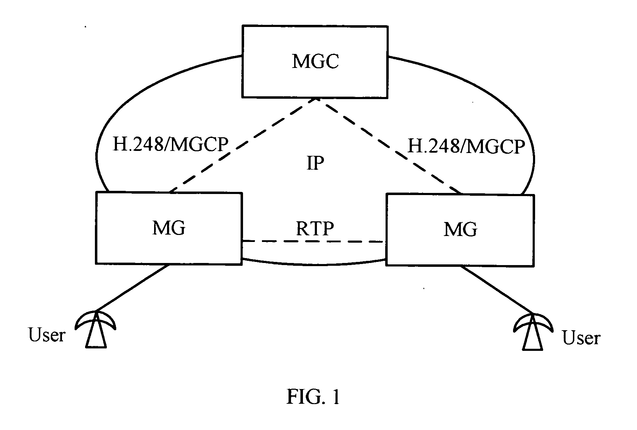

The media gateway control protocol is a primary protocol for communications between the MGC and the MG. Currently, the H.248/Gateway Control Protocol (H.248/MeGaCo) and the Media Gateway Control Protocol (MGCP) are widely used, as shown in FIG. 1.

The H.248/MeGaCo protocol derives from the MGCP. Taking the H.248 protocol as an example, the MG carries a service through the resources on the MG. Such resources are abstractly expressed as terminations. The associations between terminations are abstractly expressed as contexts. A context may include multiple terminations. Thus, a topology is used to describe the relationship between the terminations. Terminations that are not associated with other terminations are included in a null context.

Based on the above abstract connection model, interactions between the services and the bearers are actually operations on the terminations and the contexts. Such operations are performed through command requests and replies between the MGC and the MG. Command types include: Add, Modify, Subtract, Move, AuditValue, AuditCapabilities, Notify, and ServiceChange. Command parameters, also known as descriptors, are categorized into property, signal, event, and statistic. For better description, parameters with service relevancy are aggregated into a package logically

A basic function of H.248 is the allocation of resources on an MG. Its abstract connection model enables an MGC to designate features for specific contexts or terminations and the MG then translates the features into specific resource allocations. In the network architecture with services separated from bearers, the MGC does not need to know the resource or structure details inside the MG so that the control of bearers is simplified. However, this may also cause conflicts between features designated by the MGC and resource management operations executable by the MG, and in particular, a feature designated by the MGC may violate a specific rule of resource management (named "resource management rule") of the MG so that the resource allocation of the MG is not efficient or even fail.

Specifically, according to H.248, the MGC requires different resources at different stages of calls, sessions and services. This enables the resource allocation to be a dynamic change process, during which the resource requirement of the MGC may change so that it is necessary to instruct the MG to perform an operation on resources concerned accordingly. This operation may conflict with the resource management executable by the MG so that the resource allocation of the MG may not be efficient or even fail.

A typical scenario is like this: a pure voice session is initially ongoing between two parties, and at a certain stage, the two parties need to change the pure voice session to a multimedia session including audio and video. According to this scenario, the MGC initially instructs the MG to create an audio stream and when the changeover happens, the MGC has two options: one is to instruct the MG to create a video stream; the other is to instruct the MG to change the audio stream to a compound stream of audio and video. According to the two options, the MG will perform different resource allocations: with respect to the first option, the MG only needs to allocate respective codec resources for audio and video; with respect to the latter, the MG also needs to allocate compounding and parsing resources. In practice, the MG may support only one resource allocation mode. Because the MGC does not know resource management rules of the MG, the MGC may choose a resource allocation mode not supported by the MG, and as a result, the resource allocation is unsuccessful and even the service fails.

In "Gateway control protocol: Version 3; H.248.1 (09/05)" ITU-T STANDARD IN FORCE (I), INTERNATIONAL TELECOMMUNICATION UNION, GENEVA, CH, no. H.248.1 (09/05), 13 September 2005 (2005-09-13), pages 1-96, XP002587351, protocols used between elements of a physically decomposed multimedia gateway are disclosed.

### Summary of the Invention

The present invention provides a resource control method and a device in an architecture where services are separated from bearers, so as to reduce the probability of resource operation failure.

As a first aspect of the invention the resource control method in an architecture with services separated from bearers includes:
obtaining, by a bearer control device, resource management rules supported by a bearer device
and instructing the bearer device to perform an operation on a resource according to the obtained resource management rules;
from the bearer device; wherein the step of obtaining, by the bearer control device, the resource management rules supported by the bearer device from the bearer device comprises:
   sending, by the bearer control device, the bearer device an AuditCapabilities request which carries at least one property describing resource management rules, wherein each property corresponds to one type of resource management rule and indicates the type of resource management rule to be audited; and
   receiving, by the bearer control device, from the bearer device an AuditCapabilities reply which carries the at least one property, values of each property indicating the type of resource management rule supported by the bearer device;wherein the resource management rules comprise a resource management rule corresponding to a media type; and wherein the resource management rule corresponding to the media type specifies whether the media type of the resource is variable; and values of the resource management rule corresponding to the media type property comprise at least one of the following: "Constant", which means the media type of allocated resource is constant, and "Variable", which means the media type of allocated resource is variable;
the step of instructing, by the bearer control device, the bearer device to perform the operation on the resource according to the obtained resource management rules comprises:
   if the resource management rule corresponding to the media type property takes on the "Constant" value, prohibiting the bearer control device from instructing the bearer device to change the media type of the allocated resource; and
   if the resource management rule corresponding to the media type property takes on the "Variable" value, allowing the bearer control device to instruct the bearer device to change the media type of the allocated resource.

As a second aspect of the invention the bearer control device includes:
a rule obtaining unit, adapted to obtain resource management rules supported by a bearer device,
wherein the resource management rules comprise a resource management rule corresponding to a media type; and
an operation instructing unit, adapted to instruct the bearer device to perform an operation on a resource according to the resource management rules obtained by the rule obtaining unit;
wherein the rule obtaining unit comprises:
   an audit request sending subunit, adapted to send the bearer device an AuditCapabilities request which carries at least one property describing resource management rules, wherein each property corresponds to one type of resource management rule and indicates the type of resource management rule to be audited;
   an audit reply receiving subunit, adapted to receive from the bearer device an AuditCapabilities reply which carries the at least one property, values of each property indicating the type of resource management rule supported by the bearer device; and
   a rule extracting subunit, adapted to extract the values of the at least one property from the AuditCapabilities reply received by the audit reply receiving subunit to obtain the resource management rules supported by the bearer device; wherein the resource management rule corresponding to the media type specifies whether the media type of the resource is variable; and values of the resource management rule corresponding to the media type property comprise at least one of the following: "Constant", which means the media type of allocated resource is constant, and "Variable", which means the media type of allocated resource is variable;
the step of instructing, by the bearer control device, the bearer device to perform the operation on the resource according to the obtained resource management rules comprises:
   if the resource management rule corresponding to the media type property takes on the "Constant" value, prohibiting the bearer control device from instructing the bearer device to change the media type of the allocated resource; and
   if the resource management rule corresponding to the media type property takes on the "Variable" value, allowing the bearer control device to instruct the bearer device to change the media type of the allocated resource.

Compared with the prior art, the present invention provides the following feature and benefit:
A bearer control device obtains resource management rules supported by a bearer device before it sends a resource operation command according to the resource management rules; this guarantees that the delivered resource operation command is supported by the bearer device and thus reduces the probability of resource operation failure.

### Brief Description of the Drawings

FIG. 1 shows a networking diagram of an MGC and two MGs in the prior art;
FIG. 2 shows a flowchart of a resource control method in an architecture with services separated from bearers according to an embodiment of the present invention;
FIG. 3 shows a flowchart of a resource control method in an architecture with services separated from bearers according to another embodiment of the present invention;
FIG. 4 shows the system structure of a bearer control device and a bearer device according to an embodiment of the present invention;
FIG. 5 shows the structure of a bearer control device according to an embodiment of the present invention; and
FIG. 6 shows the structure of a bearer device according to an embodiment of the present invention.

### Detailed Description of the Embodiments

To better explain the objective, technical solution and advantages of the present invention, the following describes embodiments of the present invention in detail with reference to the accompanying drawings.

A first embodiment of the present invention relates to a resource control method in an architecture with services separated from bearers. In this embodiment, a bearer control device (e.g. an MGC) obtains resource management rules supported by a bearer device (e.g. an MG) from the bearer device and delivers a resource operation command according to the obtained resource management rules so that the delivered resource operation command is supported by the bearer device and thereby the probability of resource operation failure is lower.

The method is described in detail with exemplary embodiments where the bearer control device is an MGC and the bearer device is an MG.

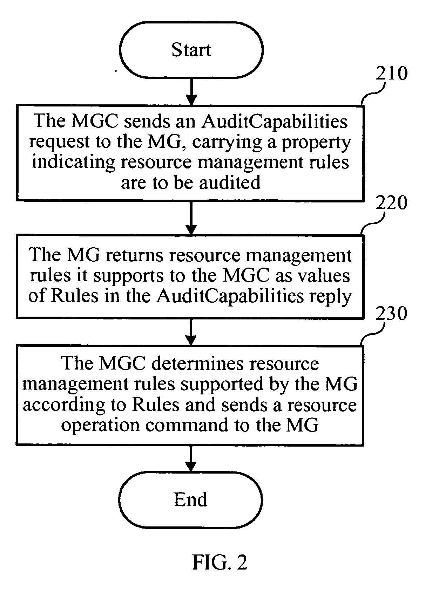

FIG. 2 shows a flowchart of a resource control method in an architecture with services separated from bearers according to an embodiment of the present invention.

In this embodiment, one or more property parameters need to be defined first to describe the resource management rules supported by the MG. Each property parameter corresponds to one type of resource management rule. For example, the Resource Media Type Rule property specifies whether the media type of a resource is variable and the Resource Holding Maximum Time property specifies the maximum time in seconds when a resource can be held. The one or more property parameters may be defined in an existing or new package.

For easy description, in this embodiment, the above Resource Media Type Rule property is described as "Rules" and the property is defined in a new package named "Resource Management Rules". The embodiment is detailed below by taking the Rules property as an example.

Possible values of the property parameter include: None, Constant and/or Variable. The value "None" means no specific rule is determined; "Constant" means the media type of the allocated resource is constant; and "Variable" means the media type of the allocated resource is variable. In practice, the type of the property parameter may be an enumeration list and an enumeration set of all or part of the values are included in the property parameter. This means the property parameter may include all the above three values or include only part of the values. For example, it may include only "None" and "Constant" or include only "Variable" and "Constant".

In step 210, when the MGC needs to know the resource management rules supported by the MG, the MGC sends the MG an AuditCapabilities request which carries a Rules property indicating the MGC intends to audit the media type resource management rule. In this step, the request may carry the resource management rule of another type, indicating that the MGC needs to audit the resource management rule of this type. The implementation is alike and therefore omitted.

In step 220, the MG returns the MGC an AuditCapabilities reply which also carries the Rules property, where the MG sends the resource management rules it supports to the MGC as values of the Rules property.

Specifically, if the MG does not have a specific rule, the value of the Rules property is "None"; if the resource management rule supported by the MG is that the media type of the allocated resource is constant, the value of Rules is "Constant"; if the resource management rule supported by the MG is that the media type of the allocated resource is variable, the value of Rules is "Variable"; or, if the MG supports multiple resource management rules, the Rules property may include multiple values corresponding to the rules.

In step 230, the MGC determines the resource management rules supported by the MG according to the Rules values returned by the MG and when necessary, the MGC delivers a resource operation command to the MG according to the resource management rules supported by the MG, instructing the MG to perform an operation on the resource. Because the MGC obtains the resource management rules supported by the MG before it delivers a resource operation command according to the obtained resource management rules, it is guaranteed that the delivered resource operation command is supported by the MG so that the probability of resource operation failure is lower.

Specifically, if the value of Rules carried in the AuditCapabilities reply is "Constant", which means the resource management rule supported by the MG is that the media type of the allocated resource is constant, when delivering a resource operation command, the MGC should avoid requesting the MG to change the media type of a resource after the resource is allocated by the MG for a certain media type. If the value of Rules carried in the AuditCapabilities reply is "Variable", which means the resource management rule supported by the MG is that the media type of the allocated resource is variable, when delivering a resource operation command, the MGC may request the MG to change the media type of a resource after the resource is allocated by the MG for a certain media type. If the value of Rules is "None", which means the MG does not have a determined rule, the MGC may send a resource operation command freely but the delivered command may not be successfully executed by the MG.

A specific scenario is described for further explanation. In the scenario where a pure voice session between two parties is changed to a multimedia session including audio and video, the MGC initially instructs the MG to create an audio stream 1 and the MG allocates an appropriate audio codec resource for the audio stream. In the event of changeover, if the value of Rules is "Constant", the MGC instructs the MG to create a pure video stream 2 and the MG allocates an appropriate video codec resource for the video stream; if the value of Rules is "Variable", the MGC may instruct the MG to change the original audio stream 1 to a multimedia stream 1 including audio and video and the MG will allocate an additional video codec resource for the multimedia stream 1 and appropriate audio/video stream compounding and parsing resources.

In this embodiment, a property describing resource management rules is added to the AuditCapabilities request and values of the property are carried in the AuditCapabilities reply to indicate the resource management rules supported by the bearer device so that the MGC is able to obtain the resource management rules supported by the MG and deliver a resource operation command according to the rules. The probability of resource operation failure is therefore lower. Moreover, the implementation requires only simple extension to the existing protocol and therefore is easy.

A second embodiment of the present invention also relates to a resource control method in an architecture with services separated from bearers, and is quite similar to the first embodiment. The difference lies in that, in the second embodiment, if the bearer device MG supports multiple resource management rules of a same type, the bearer control device MGC chooses one rule and instructs the MG to perform resource management by using the chosen rule in subsequent resource management. This may guarantee that the resource management mode of the bearer device is consistent with the expectation of the bearer control device and thus reduce the happening of implicit errors.

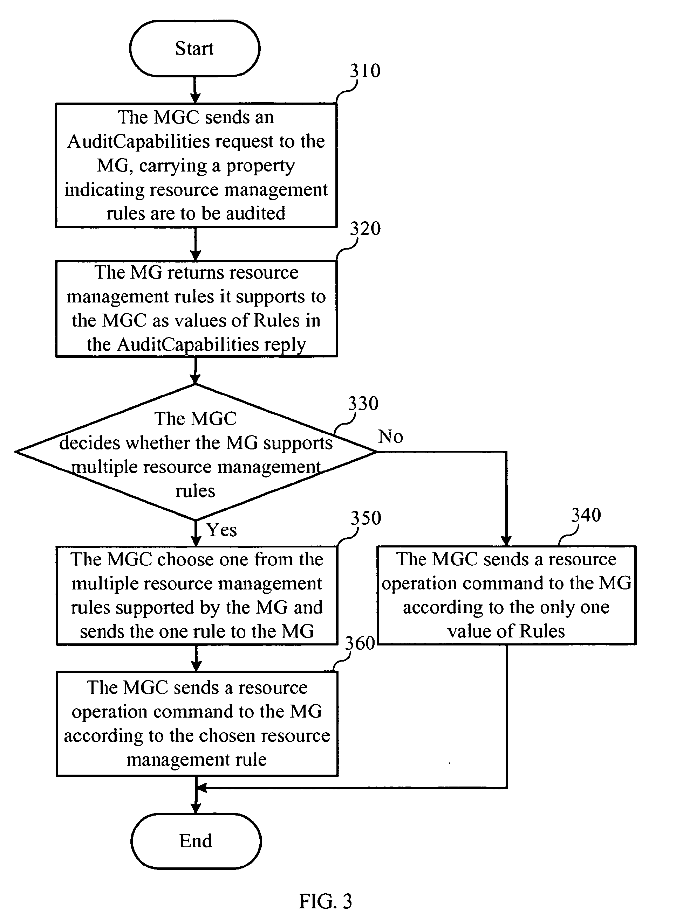

FIG. 3 shows a flowchart of a resource control method in an architecture with services separated from bearers according to another embodiment of the present invention.

In this embodiment, steps 310 and 320 are the same as steps 210 and 220 and are omitted here.

In step 330, after the MGC receives the AuditCapabilities reply, the MGC checks whether the Rules property includes multiple values, or whether the MG supports multiple resource management rules, and-if so, the process proceeds to step 350; otherwise the process proceeds to step 340.

In step 340, because the Rules property carried in the AuditCapabilities reply returned by the MG to the MGC includes only one value, the MGC delivers a resource operation command to the MG when necessary according to the resource management rule supported by the MG as indicated by the only one value, instructing the MG to perform an operation on the resource. Because the MGC obtains the resource management rules supported by the MG before it delivers a resource operation command according to the obtained resource management rules, it is guaranteed that the delivered resource operation command is supported by the MG so that the probability of resource operation failure is lower.

Specifically, if the value of Rules carried in the AuditCapabilities reply is "Constant", when delivering the resource operation command, the MGC should avoid requesting the MG to change the media type of a resource after the resource is allocated for a certain media type by the MG. If the value of Rules is "Variable", when delivering the resource operation command, the MGC may request the MG to change the media type of a resource after the resource is allocated for a certain media type by the MG. If the value of Rules is "None", which means the MG does not have a determined rule, the MGC may send a resource operation command freely but the delivered command may not be successfully executed by the MG.

In step 350, because the Rules property carried in the AuditCapabilities reply sent by the MG to the MGC includes multiple values, the MGC needs to choose one from the multiple resource management rules supported by the MG and take the chosen resource management rule as the value of Rules. The value of Rules is carried in a Modify command and sent to the MG, instructing the MG to use the chosen resource management rule for subsequent resource management. This may guarantee that the resource management mode of the MG is consistent with the expectation of the MGC and thus reduce the happening of implicit errors.

For example, if the resource management rule chosen by the MGC is that the media type of the allocated resource is constant, the MGC sets the value of Rules to "Constant" and sends the value in a Modify command to the MG; or, if the resource management rule chosen by the MGC is that the media type of the allocated resource is variable, the MGC sets the value of Rules to "Variable" and sends the value in a Modify command to the MG. Afterwards, the process proceeds to step 360.

In step 360, when necessary, the MGC delivers a resource operation command to the MG according to the resource management rule chosen in step 350, instructing the MG to perform a resource operation.

Specifically, if the resource management rule chosen by the MGC in step 350 is that the media type of the allocated resource is constant, when delivering the resource operation command, the MGC should avoid requesting the MG to change the media type of a resource after the resource is allocated by the MG for a certain media type. If the resource management rule chosen by the MGC is that the media type of the allocated resource is variable, when delivering the resource operation command, the MGC may request the MG to change the media type of a resource after the resource is allocated by the MG for a certain media type.

It should be noted that, to avoid exceptional errors of the MGC, a preventative action may be set on the MG according to this embodiment. Specifically, when the MG receives the resource operation command from the MGC, the MG first makes a judgment. If the resource management operation requested by the MGC violates the resource management rule set by the MG or the resource management rule chosen in step 350, the MG returns the MGC relevant error information which may include an error code and/or an error description text. With such error management of the MG, the entire system is more robust. The MG will not follow an error made by the MGC so that implicit errors in the MGC may be detected in time.

This embodiment is also explained by taking the Rules property as an example. The implementation of other properties is alike and is therefore omitted here.

This embodiment also relates to a resource control method in an architecture with services separated from bearers, and is quite similar to the foregoing two embodiments. The difference lies in that, in the foregoing two embodiments, the bearer control device (like an MGC) sends an AuditCapabilities request so as to obtain the resource management rules supported by the bearer device (like an MG) from the bearer device while in this embodiment, the resource management rules supported by the bearer device are set in the bearer control device and the bearer control device obtains the resource management rules directly from its inside.

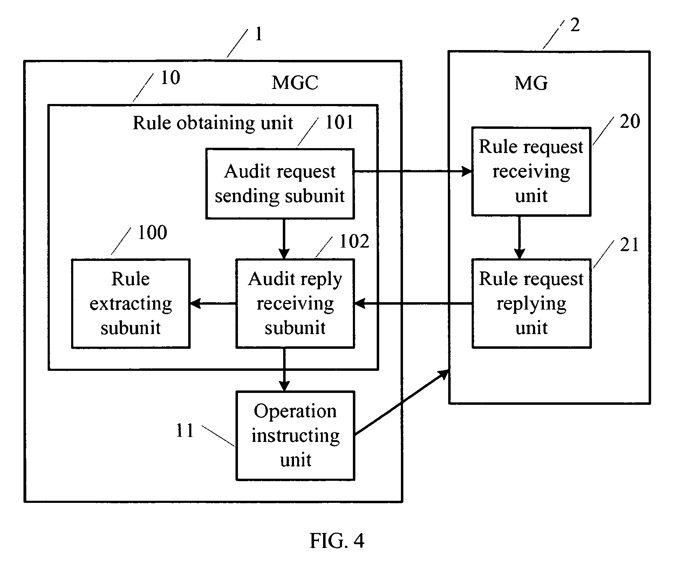

FIG. 4 shows a system structure of the bearer control device and bearer device in an embodiment of the present invention.

The embodiment of the present invention relates to a bearer control device, which may be an MGC 1 and includes a rule obtaining unit 10, adapted to obtain resource management rules supported by a bearer device (MG 2 in the embodiment); and an operation instructing unit 11, adapted to instruct the bearer device (MG 2) to perform a resource operation according to the resource management rules obtained by the rule obtaining unit 10. Because the MGC 1 obtains the resource management rules supported by the MG 2 before it delivers the resource operation command according to the obtained resource management rules, it is guaranteed that the delivered resource operation command is supported by the MG 2 so that the probability of resource operation failure is lower.

The rule obtaining unit 10 obtains the resource management rules supported by the bearer device MG 2 from the MG 2. As shown in FIG. 4, the rule obtaining unit 10 may further include: an audit request sending subunit 100, adapted to send the MG 2 an AuditCapabilities request which carries at least one property, where each property corresponds to one type of resource management rule and indicates the type of resource management rule to be audited; an audit reply receiving subunit 101, adapted to receive the AuditCapabilities reply returned by the MG 2, where the AuditCapabilities reply carries the at least one property, the values of which specify the type of resource management rule supported by the bearer device; and a rule extracting subunit 102, adapted to extract the values of the at least one property from the AuditCapabilities reply received by the audit reply receiving subunit 101 to obtain the types of resource management rules supported by the bearer device MG 2. The probability of resource operation failure can be reduced through simple extension to the AuditCapabilities request and AuditCapabilities reply defined by the existing protocol. The implementation is easy.

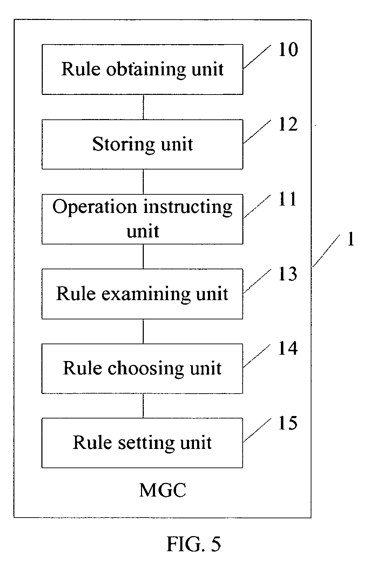

As shown in FIG. 5, the bearer control device MGC 1 further includes a storing unit 12 in addition to the above rule obtaining unit 10 and operation instructing unit 11. The storing unit 12 is adapted to store the resource management rules supported by the MG 2 and the rule obtaining unit 10 obtains the resource management rule supported by the MG 2 from the storing unit 12.

The bearer control device MGC 1 may further include: a rule examining unit 13, adapted to determine whether the bearer device supports at least two resource management rules of a same type according to the resource management rules obtained by the rule obtaining unit 10; a rule choosing unit 14, adapted to choose one from the at least two resource management rules if the rule examining unit 13 determines that the bearer device supports at least two resource management rules of the same type; and a rule setting unit 15, adapted to instruct the MG 2 to use the resource management rule chosen by the rule choosing unit 14 for subsequent resource management. Because the MGC 1 chooses a resource management rule supported by the MG 2, the resource management mode of the MG 2 is consistent with the expectation of the MGC 1 and the happening of implicit errors is reduced.

An embodiment of the present invention relates to a bearer device MG 2. As shown in FIG. 4, the bearer device includes a rule request receiving unit 20, adapted to receive a resource management rule request from the bearer control device MGC 1; a rule request replying unit 21, adapted to send a reply to the bearer control device when the rule request receiving unit 20 receives the resource management rule request, where the reply carries resource management rules supported by the bearer device. This guarantees that the resource operation command sent by the bearer control device is supported by the bearer device and thus reduces the probability of resource operation failure.

The above resource management rule request is an AuditCapabilities request which carries at least one property, where each property corresponds to one type of resource management rule and indicates the type of resource management rule to be audited. The above reply is an AuditCapabilities reply which carries the at least one property, the values of which specify the resource management rules supported by the bearer device.

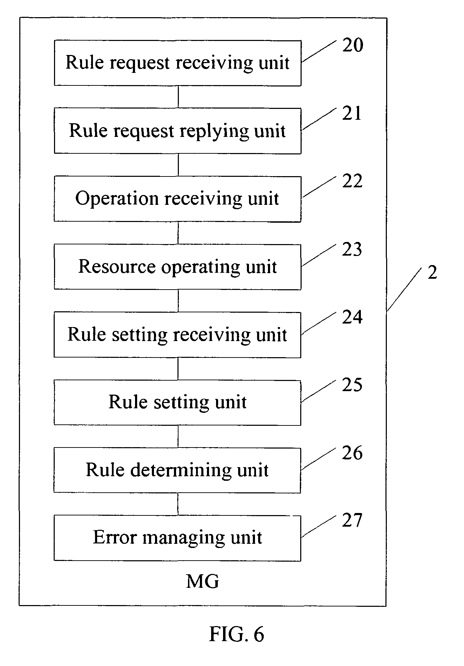

FIG. 6 shows a structure of a bearer device in an embodiment of the present invention.

As shown in FIG. 6, in addition to the above rule request receiving unit 20 and the rule request replying unit 21, the bearer device MG 2 may further include: an operation receiving unit 22, adapted to receive a resource operation instruction from the bearer control device MGC 1; and a resource operating unit 23, adapted to perform an operation on an appropriate resource according to the instruction received by the operation receiving unit 22.

The bearer device MG 2 may further include: a rule setting receiving unit 24, adapted to receive a resource management rule setting instruction from the bearer control device MGC 1; a rule setting unit 25, adapted to set a resource management rule chosen by the bearer control device MGC 1 in the bearer device according to the setting instruction received by the rule setting receiving unit 24; a rule determining unit 26, adapted to decide whether the operation violates the resource management rule set by the rule setting unit 25 when the operation receiving unit 22 receives a resource operation instruction; and an error managing unit 27, adapted to return error information to the bearer control device when the rule determining unit 26 determines that the operation violates the resource management rule set by the rule setting unit 25, where the error information includes an error code and/or an error description text. The resource operating unit 23 performs the operation on the appropriate resource when the rule determining unit 26 determines that the operation conforms to the resource management rule set by the rule setting unit 25. With the error management in the bearer device MG 2, the entire system is more robust. The MG 2 will not follow an error made by the MGC 1 so that implicit errors in the MGC 1 can be detected in time.

To sum up, in the embodiments of the present invention, a bearer control device obtains resource management rules supported by a bearer device from the bearer device and delivers a resource operation command according to the obtained resource management rules so that the delivered resource operation command is supported by the bearer device and thereby the probability of resource operation failure is lower.

At least one property describing resource management rules may be added to the AuditCapabilities request, where each property corresponds to one type of resource management rule and indicates the type of resource management rule to be audited; the AuditCapabilities reply carries values of the at least one property to indicate the type of resource management rule supported by the bearer device. This can be easily implemented through simple extension to the existing protocol and help reduce the probability of resource operation failure.

If the bearer device supports multiple resource management rules of the same type, the bearer control device may choose one rule and instructs the bearer device to use the chosen resource management rule in subsequent operations. This may guarantee that the resource management mode of the bearer device is completely consistent with the expectation of the bearer control device and thus reduce the happening of implicit errors.

If the bearer control device requests the bearer device to perform a resource operation that violates the resource management rule set by the bearer device or the bearer control device, the bearer device returns error information to the bearer control device. With such error management of the bearer device, the entire system is more robust. The bearer device will not follow an error made by the bearer control device so that implicit errors in the bearer control device will be detected in time.

Based on the descriptions of the foregoing embodiments, those skilled in art may be clear that the embodiments of the present invention can be implemented by software on a necessary general hardware platform or implemented by hardware only. Based on such understanding, all or part of contributions of the technical solution of the present invention to the prior art may be represented by a software product. The software product may be stored in a storage medium, such as a Read-Only Memory/Random Access Memory (ROM/RAM), a magnetic disk, and a compact disk. The software product includes a number of instructions that enable a computer device (which may be a personal computer, a server or a network device) to execute the method according to the embodiments of the present invention or a certain part of an embodiment of the present invention.

Although the present invention has been described through several exemplary embodiments and accompanying drawings, the invention is not limited to such embodiments.

## Claims

1. A resource control method in an architecture with services separated from bearers, **characterized by** comprising:
obtaining, by a bearer control device, resource management rules supported by a bearer device from the bearer device, wherein the resource management rules comprise a resource management rule corresponding to a media type; and
instructing, by the bearer control device, the bearer device to perform an operation on a resource according to the obtained resource management rules;
wherein the step of obtaining, by the bearer control device, the resource management rules supported by the bearer device from the bearer device comprises:
sending, by the bearer control device, the bearer device an AuditCapabilities request which carries at least one property describing resource management rules, wherein each property corresponds to one type of resource management rule and indicates the type of resource management rule to be audited (210; 310); and
receiving, by the bearer control device, from the bearer device an AuditCapabilities reply which carries the at least one property, values of each property indicating the type of resource management rule supported by the bearer device (220; 320); wherein the resource management rule corresponding to the media type specifies whether the media type of the resource is variable; and values of the resource management rule corresponding to the media type property comprise at least one of the following: "Constant", which means the media type of allocated resource is constant, and "Variable", which means the media type of allocated resource is variable;
the step of instructing, by the bearer control device, the bearer device to perform the operation on the resource according to the obtained resource management rules comprises:
if the resource management rule corresponding to the media type property takes on the "Constant" value, prohibiting the bearer control device from instructing the bearer device to change the media type of the allocated resource; and
if the resource management rule corresponding to the media type property takes on the "Variable" value, allowing the bearer control device to instruct the bearer device to change the media type of the allocated resource.

2. The method according to claim 1, wherein: values of the resource management rule corresponding to the media type property comprise "None", which means no rule is determined;
the step of instructing, by the bearer control device, the bearer device to perform the operation on the resource according to the obtained resource management rules comprises:
if the resource management rule corresponding to the media type property takes on the "None" value, allowing the bearer control device to freely instruct the bearer device to perform the operation on the resource.

3. The method according to claim 1, wherein after the step of obtaining the resource management rules supported by the bearer device, the method further comprises:
if the bearer device supports at least two resource management rules of a same type, choosing, by the bearer control device, one from the at least two resource management rules and instructing the bearer device to use the resource management rule for subsequent resource management.

4. The method according to claim 3, wherein after the step of instructing, by the bearer control device, the bearer device to perform the operation on the resource, the method further comprises:
if the operation violates the resource management rule that the bearer control device instructs the bearer device to use subsequently, returning, by the bearer device, the bearer control device error information which comprises at least one of an error code and an error description text.

5. The method according to any one of claims 1 to 4, wherein the bearer control device is a media gateway controller and the bearer device is a media gateway.

6. A bearer control device, **characterized by** comprising:
a rule obtaining unit (10), adapted to obtain resource management rules supported by a bearer device from the bearer device, wherein the resource management rules comprise a resource management rule corresponding to a media type; and
an operation instructing unit (11), adapted to instruct the bearer device to perform an operation on a resource according to the resource management rules obtained by the rule obtaining unit;
wherein the rule obtaining unit (10) comprises:
an audit request sending subunit (101), adapted to send the bearer device an AuditCapabilities request which carries at least one property describing resource management rules, wherein each property corresponds to one type of resource management rule and indicates the type of resource management rule to be audited;
an audit reply receiving subunit (102), adapted to receive from the bearer device an AuditCapabilities reply which carries the at least one property, values of each property indicating the type of resource management rule supported by the bearer device; and
a rule extracting subunit (100), adapted to extract the values of the at least one property from the AuditCapabilities reply received by the audit reply receiving subunit to obtain the resource management rules supported by the bearer device; wherein the resource management rule corresponding to the media type specifies whether the media type of the resource is variable; and values of the resource management rule corresponding to the media type property comprise at least one of the following: "Constant", which means the media type of allocated resource is constant, and "Variable", which means the media type of allocated resource is variable;
the step of instructing, by the bearer control device, the bearer device to perform the operation on the resource according to the obtained resource management rules comprises:
if the resource management rule corresponding to the media type property takes on the "Constant" value, prohibiting the bearer control device from instructing the bearer device to change the media type of the allocated resource; and
if the resource management rule corresponding to the media type property takes on the "Variable" value, allowing the bearer control device to instruct the bearer device to change the media type of the allocated resource.

7. The bearer control device according to claim 6, further comprising:
a rule examining unit (13), adapted to determine whether the bearer device supports at least two resource management rules of a same type according to the resource management rules obtained by the rule obtaining unit;
a rule choosing unit (14), adapted to choose one from the at least two resource management rules if the rule examining unit determines that the bearer device supports at least two resource management rules of the same type; and
a rule setting unit (15), adapted to instruct the bearer device to use the resource management rule chosen by the rule choosing unit for subsequent resource management.

## Patentansprüche

1. Betriebsmittelsteuerverfahren in einer Architektur mit von den Trägern getrennten Diensten, **dadurch gekennzeichnet, dass** es Folgendes umfasst:
Erhalten der Betriebsmittelmanagementregeln, die durch eine Trägervorrichtung unterstützt werden, durch eine Trägersteuervorrichtung von der Trägervorrichtung, wobei die Betriebsmittelmanagementregeln eine Betriebsmittelmanagementregel umfassen, die einem Medientyp entspricht; und
Anweisen der Trägervorrichtung, eine Operation an einem Betriebsmittel in Übereinstimmung mit den erhaltenen Betriebsmittelmanagementregeln auszuführen, durch die Trägersteuervorrichtung;
wobei der Schritt des Erhaltens der Betriebsmittelmanagementregeln, die durch die Trägervorrichtung unterstützt werden, durch die Trägersteuervorrichtung von der Trägervorrichtung Folgendes umfasst:
Senden einer AuditCapabilities-Anforderung, die wenigstens eine Eigenschaft führt, die die Betriebsmittelmanagementregeln beschreibt, an die Trägervorrichtung durch die Trägersteuervorrichtung, wobei jede Eigenschaft einem Typ der Betriebsmittelmanagementregel entspricht und den Typ der Betriebsmittelmanagementregel angibt, der zu prüfen ist (210; 310); und
Empfangen einer AuditCapabilities-Antwort, die die wenigstens eine Eigenschaft führt, von der Trägervorrichtung durch die Trägersteuervorrichtung, wobei die Werte jeder Eigenschaft den Typ der Betriebsmittelmanagementregel angeben, der durch die Trägervorrichtung (220; 320) unterstützt wird; wobei die Betriebsmittelmanagementregel, die dem Medientyp entspricht, spezifiziert, ob der Medientyp des Betriebsmittels variabel ist; wobei die Werte der Betriebsmittelmanagementregel, die der Medientyp-Eigenschaft entsprechen, wenigstens einen der Folgenden umfassen: "konstant", was bedeutet, dass der Medientyp des zugewiesenen Betriebsmittels konstant ist, und "variabel", was bedeutet, dass der Medientyp des zugewiesenen Betriebsmittels variabel ist;
wobei der Schritt des Anweisens der Trägervorrichtung, die Operation an dem Betriebsmittel in Übereinstimmung mit den erhaltenen Betriebsmittelmanagementregeln auszuführen, durch die Trägersteuervorrichtung Folgendes umfasst:
falls die Betriebsmittelmanagementregel, die der Medientyp-Eigenschaft entspricht, den "konstant"-Wert annimmt, Verbieten, dass die Trägersteuervorrichtung die Trägervorrichtung anweist, den Medientyp des zugewiesenen Betriebsmittels zu ändern; und
falls die Betriebsmittelmanagementregel, die der Medientyp-Eigenschaft entspricht, den "variabel"-Wert annimmt, Erlauben, dass die Trägersteuervorrichtung die Trägervorrichtung anweist, den Medientyp des zugewiesenen Betriebsmittels zu ändern.

2. Verfahren nach Anspruch 1, wobei: die Werte der Betriebsmittelmanagementregel, die der Medientyp-Eigenschaft entsprechen, "keine" umfassen, was bedeutet, dass keine Regel bestimmt ist;
wobei der Schritt des Anweisens der Trägervorrichtung, die Operation an dem Betriebsmittel in Übereinstimmung mit den erhaltenen Betriebsmittelmanagementregeln auszuführen, durch die Trägersteuervorrichtung Folgendes umfasst:
falls die Betriebsmittelmanagementregel, die der Medientyp-Eigenschaft entspricht, den "keine"-Wert annimmt, Erlauben, dass die Trägersteuervorrichtung die Trägervorrichtung frei anweist, die Operation an dem Betriebsmittel auszuführen.

3. Verfahren nach Anspruch 1, wobei nach dem Schritt des Erhaltens der durch die Trägervorrichtung unterstützten Betriebsmittelmanagementregeln das Verfahren ferner Folgendes umfasst:
falls die Trägervorrichtung wenigstens zwei Betriebsmittelmanagementregeln desselben Typs unterstützt, Wählen einer von den wenigstens zwei Betriebsmittelmanagementregeln und Anweisen der Trägervorrichtung, die Betriebsmittelmanagementregel für das nachfolgende Betriebsmittelmanagement zu verwenden, durch die Trägersteuervorrichtung.

4. Verfahren nach Anspruch 3, wobei nach dem Schritt des Anweisens der Trägervorrichtung, die Operation an dem Betriebsmittel auszuführen, durch die Trägersteuervorrichtung das Verfahren ferner Folgendes umfasst:
Zurückschicken der Trägersteuervorrichtungs-Fehlerinformationen, die einen Fehlercode und/oder einen Fehlerbeschreibungstext umfassen, durch die Trägervorrichtung, falls die Operation die Betriebsmittelmanagementregel verletzt, deren nachfolgende Verwendung durch die Trägervorrichtung durch die Trägersteuervorrichtung angewiesen worden ist.

5. Verfahren nach einem der Ansprüche 1 bis 4, wobei die Trägersteuervorrichtung eine Medien-Gateway-Steuereinrichtung ist und die Trägervorrichtung ein Medien-Gateway ist.

6. Trägersteuervorrichtung, **dadurch gekennzeichnet, dass** sie Folgendes umfasst:
eine Regelerhalteeinheit (10), die dafür ausgelegt ist, die Betriebsmittelmanagementregeln, die durch eine Trägervorrichtung unterstützt werden, von der Trägervorrichtung zu erhalten, wobei die Betriebsmittelmanagementregeln eine Betriebsmittelmanagementregel umfassen, die einem Medientyp entspricht; und
eine Operationsanweisungseinheit (11), die dafür ausgelegt ist, die Trägervorrichtung anzuweisen, eine Operation an einem Betriebsmittel in Übereinstimmung mit den durch die Regelerhalteeinheit erhaltenen Betriebsmittelmanagementregeln auszuführen;
wobei die Regelerhalteeinheit (10) Folgendes umfasst:
eine Prüfanforderungs-Sendeuntereinheit (101), die dazu ausgelegt ist, der Trägervorrichtung eine AuditCapabilities-Anforderung zu senden, die wenigstens eine Eigenschaft führt, die die Betriebsmittelmanagementregeln beschreibt, wobei jede Eigenschaft einem Typ der Betriebsmittelmanagementregel entspricht und den Typ der Betriebsmittelmanagementregel angibt, der zu prüfen ist;
eine Prüfantwort-Empfangsuntereinheit (102), die dafür ausgelegt ist, von der Trägervorrichtung eine AuditCapabilities-Antwort zu empfangen, die die wenigstens eine Eigenschaft führt, wobei die Werte jeder Eigenschaft den Typ der Betriebsmittelmanagementregel angeben, der durch die Trägervorrichtung unterstützt wird; und
eine Regelextraktions-Untereinheit (100), die dafür ausgelegt ist, die Werte der wenigstens einen Eigenschaft aus der durch die Prüfantwort-Empfangsuntereinheit empfangenen AuditCapabilities-Antwort zu extrahieren, um die durch die Trägervorrichtung unterstützten Betriebsmittelmanagementregeln zu erhalten; wobei die Betriebsmittelmanagementregel, die dem Medientyp entspricht, spezifiziert, ob der Medientyp des Betriebsmittels variabel ist; wobei die Werte der Betriebsmittelmanagementregel, die der Medientyp-Eigenschaft entsprechen, wenigstens einen der Folgenden umfassen: "konstant", was bedeutet, dass der Medientyp des zugewiesenen Betriebsmittels konstant ist, und "variabel", was bedeutet, dass der Medientyp des zugewiesenen Betriebsmittels variabel ist;
wobei der Schritt des Anweisens der Trägervorrichtung, die Operation an dem Betriebsmittel in Übereinstimmung mit den erhaltenen Betriebsmittelmanagementregeln auszuführen, durch die Trägersteuervorrichtung Folgendes umfasst:
falls die Betriebsmittelmanagementregel, die der Medientyp-Eigenschaft entspricht, den "konstant"-Wert annimmt, Verbieten, dass die Trägersteuervorrichtung die Trägervorrichtung anweist, den Medientyp des zugewiesenen Betriebsmittels zu ändern; und
falls die Betriebsmittelmanagementregel, die der Medientyp-Eigenschaft entspricht, den "variabel"-Wert annimmt, Erlauben, dass die Trägersteuervorrichtung die Trägervorrichtung anweist, den Medientyp des zugewiesenen Betriebsmittels zu ändern.

7. Trägersteuervorrichtung nach Anspruch 6, die ferner Folgendes umfasst:
eine Regeluntersuchungseinheit (13), die dafür ausgelegt ist, in Übereinstimmung mit den durch die Regelerhalteeinheit erhaltenen Betriebsmittelmanagementregeln zu bestimmen, ob die Trägervorrichtung wenigstens zwei Betriebsmittelmanagementregeln eines gleichen Typs unterstützt;
eine Regelwähleinheit (14), die dafür ausgelegt ist, eine von wenigstens zwei Betriebsmittelmanagementregeln zu wählen, falls die Regeluntersuchungseinheit bestimmt, dass die Trägervorrichtung wenigstens zwei Betriebsmittelmanagementregeln desselben Typs unterstützt; und
eine Regelsetzeinheit (15), die dafür ausgelegt ist, die Trägervorrichtung anzuweisen, die durch die Regelwähleinheit gewählte Betriebsmittelmanagementregel für das nachfolgende Betriebsmittelmanagement zu verwenden.

## Revendications

1. Procédé de commande de ressources dans une architecture à services séparés des supports, **caractérisé en ce qu'**il comprend :
l'obtention, par un dispositif de commande de support, de règles de gestion de ressources supportées par un dispositif de support depuis le dispositif de support, les règles de gestion de ressources comprenant une règle de gestion de ressources correspondant à un type de média ; et
l'ordre, par le dispositif de commande de support, au dispositif de support d'exécuter une opération sur une ressource en fonction des règles de gestion de ressources obtenues ;
dans lequel l'étape d'obtention, par le dispositif de commande de support, des règles de gestion de ressources supportées par le dispositif de support depuis le dispositif de support comprend :
l'envoi, par le dispositif de commande de support, au dispositif de support d'une requête de Capabilités d'Audit qui inclut au moins une propriété décrivant les règles de gestion de ressources, chaque propriété correspondant à un type de règle de gestion de ressources et indiquant le type de règle de gestion de ressources à auditer (210 ; 310) ; et
la réception, par le dispositif de commande de support, depuis le dispositif de support d'une réponse de Capabilités d'Audit qui inclut l'au moins une propriété, des valeurs de chaque propriété indiquant le type de règle de gestion de ressources supportée par le dispositif de support (220 ; 320) ; dans lequel la règle de gestion de ressources correspondant au type de média spécifie si le type de média de la ressource est variable ou non ; et des valeurs de la règle de gestion de ressources correspondant à la propriété de type de média comprenant au moins l'une des valeurs suivantes :
"Constant", qui signifie que le type de média de la ressource attribuée est constant, et "Variable", qui signifie que le type de média de la ressource attribuée est variable ; l'étape d'ordre, par le dispositif de commande de support, au dispositif de support d'exécuter l'opération sur la ressource en fonction des règles de gestion de ressources obtenues comprend :
si la règle de gestion de ressources correspondant à la propriété de type de média prend la valeur "Constant", l'interdiction au dispositif de commande de support d'ordonner au dispositif de support de changer le type de média de la ressource attribuée ; et
si la règle de gestion de ressources correspondant à la propriété de type de média prend la valeur "Variable", l'autorisation au dispositif de commande de support d'ordonner au dispositif de support de changer le type de média de la ressource attribuée.

2. Procédé selon la revendication 1, dans lequel : des valeurs de la règle de gestion de ressources correspondant à la propriété de type de média comprennent "Aucune", qui signifie qu'aucune règle n'est déterminée ;
l'étape d'ordre, par le dispositif de commande de support, au dispositif de support d'exécuter l'opération sur la ressource en fonction des règles de gestion de ressources obtenues comprend :
si la règle de gestion de ressources correspondant à la propriété de type de média prend la valeur "Aucune", l'autorisation au dispositif de commande de support d'ordonner librement au dispositif de support d'exécuter l'opération sur la ressource.

3. Procédé selon la revendication 1, comprenant en outre après l'étape d'obtention des règles de gestion de ressources supportées par le dispositif de support :
si le dispositif de support supporte au moins deux règles de gestion de ressources d'un même type, le choix, par le dispositif de commande de support, de l'une des au moins deux règles de gestion de ressources et l'ordre au dispositif de support d'utiliser la règle de gestion de ressources pour la gestion subséquente des ressources.

4. Procédé selon la revendication 3, comprenant en outre après l'étape d'ordre, par le dispositif de commande de support, au dispositif de support d'exécuter l'opération sur la ressource :
si l'opération enfreint la règle de gestion de ressources que le dispositif de commande de support ordonne au dispositif de support d'utiliser subséquemment, le renvoi, par le dispositif de support, de l'information d'erreur de dispositif de commande de support qui comprend au moins l'un d'un code d'erreur et d'un texte de description d'erreur.

5. Procédé selon l'une quelconque des revendications 1 à 4, dans lequel le dispositif de commande de support est un contrôleur de passerelles multimédia et le dispositif de support est une passerelle multimédia.

6. Dispositif de commande de support, **caractérisé en ce qu'**il comprend :
une unité d'obtention de règles (10), adaptée pour obtenir des règles de gestion de ressources supportées par un dispositif de support depuis le dispositif de support, les règles de gestion de ressources comprenant une règle de gestion de ressources correspondant à un type de média ; et
une unité d'ordre d'opération (11), adaptée pour ordonner au dispositif de support d'exécuter une opération sur une ressource en fonction des règles de gestion de ressources obtenues par l'unité d'obtention de règles ;
dans lequel l'unité d'obtention de règles (10) comprend :
une sous-unité d'envoi de requête d'audit (101), adaptée pour envoyer au dispositif de support une requête de Capabilités d'Audit qui inclut au moins une propriété décrivant les règles de gestion de ressources, chaque propriété correspondant à un type de règle de gestion de ressources et indiquant le type de règle de gestion de ressources à auditer ;
une sous-unité de réception de réponse d'audit (102), adaptée pour recevoir depuis le dispositif de support une réponse de Capabilités d'Audit qui inclut l'au moins une propriété, des valeurs de chaque propriété indiquant le type de règle de gestion de ressources supportée par le dispositif de support ; et
une sous-unité d'extraction de règles (100), adaptée pour extraire les valeurs de l'au moins une propriété à partir de la réponse de Capabilités d'Audit reçue par la sous-unité de réception de réponse d'audit afin d'obtenir les règles de gestion de ressources supportées par le dispositif de support ; dans lequel la règle de gestion de ressources correspondant au type de média spécifie si le type de média de la ressource est variable ou non ; et des valeurs de la règle de gestion de ressources correspondant à la propriété de type de média comprenant au moins l'une des valeurs suivantes :
"Constant", qui signifie que le type de média de la ressource attribuée est constant, et "Variable", qui signifie que le type de média de la ressource attribuée est variable ; l'étape d'ordre, par le dispositif de commande de support, au dispositif de support d'exécuter l'opération sur la ressource en fonction des règles de gestion de ressources obtenues comprend :
si la règle de gestion de ressources correspondant à la propriété de type de média prend la valeur "Constant", l'interdiction au dispositif de commande de support d'ordonner au dispositif de support de changer le type de média de la ressource attribuée ; et
si la règle de gestion de ressources correspondant à la propriété de type de média prend la valeur "Variable", l'autorisation au dispositif de commande de support d'ordonner au dispositif de support de changer le type de média de la ressource attribuée.

7. Dispositif de commande de support selon la revendication 6, comprenant en outre :
une unité d'examen de règles (13), adaptée pour déterminer si le dispositif de support supporte au moins deux règles de gestion de ressources d'un même type en fonction des règles de gestion de ressources obtenues par l'unité d'obtention de règles ;
une unité de choix de règle (14), adaptée pour choisir l'une des au moins deux règles de gestion de ressources si l'unité d'examen de règles détermine que le dispositif de commande de support supporte au moins deux règles de gestion de ressources du même type ; et
une unité d'établissement de règle (15), adaptée pour ordonner au dispositif de support d'utiliser la règle de gestion de ressources choisie par l'unité de choix de règle pour la gestion subséquente des ressources.
